(19) Europäisches Patentamt
European Patent Office
Office européen des brevets

(11) Veröffentlichungsnummer: **0 126 890**
**B1**

# (12) EUROPÄISCHE PATENTSCHRIFT

(45) Veröffentlichungstag der Patentschrift: **10.12.86**

(51) Int. Cl.⁴: **C 08 K 5/09**, C 08 K 5/42, C 08 L 67/02

(21) Anmeldenummer: **84103356.6**

(22) Anmeldetag: **27.03.84**

## (54) Hydrolysebeständige, thermoplastische Poly(butylenterephthalat)Formmassen.

(30) Priorität: **28.05.83 DE 3319501**

(43) Veröffentlichungstag der Anmeldung: **05.12.84 Patentblatt 84/49**

(45) Bekanntmachung des Hinweises auf die Patenterteilung: **10.12.86 Patentblatt 86/50**

(84) Benannte Vertragsstaaten: **CH DE FR GB IT LI NL**

(56) Entgegenhaltungen:
**US - A - 3 674 894**

**CHEMICAL ABSTRACTS, Band 86, Nr. 8, 21. Februar 1977, Seite 27, Nr. 44399s, Columbus, Ohio, US;**

(73) Patentinhaber: **HÜLS AKTIENGESELLSCHAFT, - RSP Patente / PB 15 - Postfach 13 20, D-4370 Marl 1 (DE)**

(72) Erfinder: **Dröscher, Michael, Dr., Hetkerbruch 34, D-4270 Dorsten 11 (DE)**
Erfinder: **Heuer, Horst, An der Landwehr 76, D-4358 Haltern (DE)**

**EP 0 126 890 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Aufgabe der Erfindung sind hydrolysebeständige, thermoplastique Formmassen aus hochmolekularem, linearem Poly(butylenterephthalat).

Poly(butylenterephthalate) sind ausgezeichnete Werkstoffe zur Herstellung von Filmen, Folien, Formteilen usw.; insbesondere bei der Herstellung von Formteilen nach dem Spritzguss- und Extrusionsverfahren soll das Poly(butylenterephthalat) eine Viskositätszahl > 120 $cm^3/g$ besitzen.

Poly(butylenterephthalate) werden üblicherweise durch Um- oder Veresterung und anschliessende Polykondensation von Terephthalsäure oder deren polyesterbildenden Derivaten und einem Alkandiol in Gegenwart von Katalysatoren hergestellt.

Nach diesen in der Schmelze durchgeführten Verfahren können so hohe Viskositäten, wie sie z.B. für Spritzguss- und Extrusionszwecke benötigt werden, nicht erreicht werden, da aufgrund der Temperaturbelastung in der Polykondensationsstufe bereits Abbaureaktionen einsetzen, so dass die gewünschte hohe Viskosität nicht erreicht werden kann.

Eine weitere Begrenzung der Viskosität der Polyester beim Schmelzkondensationsverfahren ergibt sich durch die mit fortschreitender Polykondensation zunehmende Viskosität der Schmelze, die das Entweichen der flüchtigen, niedermolekularen Reaktionsprodukte erschwert bzw. unmöglich macht und dadurch den Polykondensationsfortschritt hemmt. Zudem bereitet es technische Schwierigkeiten, die hochviskose Schmelze aus dem Reaktionsgefäss auszutragen (DE-OS 2 117 748).

Sofern erforderlich, wird eine Festphasennachkondensation durchgeführt (GB-PS 1 066 162, US-PS 3 405 098). Dies geschieht in der Weise, dass der Polyester in Granulat- oder Pulverform auf Temperaturen gebracht wird, die etwa 10 bis 60°C unterhalb des Schmelzpunktes liegen. In diesem Temperaturbereich wird das Poly(butylenterephthalat) so lange im Inertgasstrom oder unter Vakuum behandelt, bis die gewünschte hohe Viskosität erreicht ist.

Die Nachkondensation kann entweder diskontinuierlich, z.B. in einem Taumeltrockner (DE-OS 2 117 748), oder kontinuierlich, z.B. im Wirbelschichtverfahren (DE-OS 1 804 551) oder in einem Schneckenreaktor (DE-OS 2 162 618), durchgeführt werden.

Ein grundsätzlicher Nachteil der Festphasennachkondensation besteht in der langen Reaktionszeit bei erhöher Temperatur; dies kann dazu führen, dass zwar ein Poly(butylenterephthalat) mit der gewünschten Viskosität erhalten wird, dieses aber bereits so geschädigt ist, dass es bei der Verarbeitung aus der Schmelze stark abbaut. Aus solchem Material hergestellte Formteile sind spröde und brüchig.

Es wurde deshalb vorgeschlagen, zur Verkürzung der Nachkondensationszeit Poly(butylenterephthalate) in gemahlener Form einzusetzen, jedoch ist dieses Verfahren nicht wirtschaftlich. Ausserdem besteht die Gefahr des Zusammenbackens des Pulvers (DE-OSS 2 152 245 und 2 117 748).

In den DE-PSS 3 033 468 und 3 033 469 wurde ein Verfahren vorgeschlagen, in dem die Nachkondensation in Gegenwart von Alkandiolen in zwei Stufen durchgeführt wird. Das Verfahren hat den Nachteil, dass es zeitlich aufwendig ist.

Aufgabe der Erfindung war es, unter Aufrechterhaltung der guten Eigenschaften des Poly(butylenterephthalats) die geschilderten Nachteile zu vermeiden. Eine weitere wesentliche Aufgabe war es, ein Produkt zu entwickeln, das eine sehr gute Hydrolysebeständigkeit aufweist.

Die Aufgabe wurde dadurch gelöst, dass dem Poly(butylenterephthalat) 0,1 bis 10 Mol-%, bezogen auf die Dicarbonsäurekomponente, ein Salz der allgemeinen Formel (A)

$$\left[ (^{-}O_3S)_x\!-\!R\!-\!(CO_2^{-})_2 \right] M \qquad (A)$$

in der

M = Alkali- bzw. Erdalkalimetall-Kation

R = aromatischer, cycloaliphatischer oder aliphatischer Rest mit 2 bis 20 C-Atomen in der Kohlenstoffkette

x = 0 oder 1

bedeuten, zugesetzt wird.

Die erfindungsgemässen Formmassen enthalten vorzugsweise 0,5 bis 2,5 Mol-% der Salze der allgemeinen Formel (A).

Geeignete Salze der allgemeinen Formel (A) sind Alkali- und Erdalkalisalze von z.B. der 5-Sulfoisophthalsäure (SIPS) — hierzu seien im einzelnen genannt $Na_3$[SIPS], $K_3$[SIPS], $NaK_2$[SIPS], NaMg[SIPS], NaCa[SIPS], KCa[SIPS] — sowie die entsprechenden Salze der Iso- bzw. Terephthalsäure. Als aliphatische Dicarbonsäuren kommen solche mit 2 bis 20 C-Atomen in der Kohlenstoffkette in Frage, wie z.B. Bernsteinsäure, Adipinsäure, Dodecandisäure usw.

Bevorzugte Salze sind die Alkali- und Erdalkalisalze der Isophthalsäure und der 5-Sulfoisophthalsäure. Neben den reinen Salzen können auch gemischte Salze bzw. Salzgemische eingesetzt werden.

Als Polyester kommt in erster Linie Homo-Poly(butylenterephthalat) in Frage.

Bis zu 20 Mol-%, vorzugsweise 5 bis 15 Mol-%, der Terephthalsäure im Poly(butylenterephthalat) können durch aromatische, cycloaliphatische oder aliphatische Dicarbonsäuren ersetzt werden. Beispiele geeigneter Dicarbonsäuren sind Isophthalsäure, Phthalsäure, Cyclohexan-1.4-dicarbonsäure, Adipinsäure, Sebacinsäure, Azelainsäure, Decandicarbonsäure o. ä.

Bis zu 20 Mol-%, vorzugsweise 5 bis 15 Mol-%, des Butandiols-(1.4) können durch andere Diole wie beispielsweise Ethylenglykol, Propandiol-(1.3), Hexandiol-(1.6), Neopentylglykol, 1.4-Dimethylolcyclohexan, Dodecandiol-(1.12) o. ä. ersetzt sein.

Das erfindungsgemäss verwendete Poly(butylenterephthalat) wird in üblicher Weise durch Um- oder Veresterung und anschliessende Polykondensation von Terephthalsäure oder deren polyesterbildenden Derivaten sowie dem entsprechenden Alkandiol in Gegenwart von Katalysatoren hergestellt (Sorensen und Campbell, Preparativ Methods of Polymer Chemistry, Interscience Publishers Inc., N.Y., 1961,

Seiten 111 bis 127; Kunststoff-Handbuch, Band VIII, C. Hanser Verlag Münschen 1973, bzw. Journal of Polymer Science, part A 1, *4*, Seiten 1851 bis 1859, 1966).

Der Zeitpunkt für die Zugabe der Salze der allgemeinen Formel (A) ist nicht kritisch. Die Zugabe kann zu jedem beliebigen Zeitpunkt der Herstellung der Polyester erfolgen. Jedoch ist es auch ohne weiteres möglich, die Salze erst während der Konfektionierung (Nachkondensation, Zugabe von Hilfs- und Zusatzstoffen) in den Polyester einzubringen.

Übliche Zusatz- und Hilfsstoffe wie Pigmente, Verarbeitungsmittel, Füll- und Verstärkungsstoffe, Hydrolyse-, Thermo- oder UV-Stabilisatoren können sowohl während der Herstellung als auch in die fertigen, behandelten Formmassen eingearbeitet werden.

Nach Zusatz der Salze der allgemeinen Formel (A) weisen die erfindungsgemässen Formmassen ausgezeichnete Nachkondensationseigenschaften auf. Hiermit gemeint ist die Tatsache, dass eine Nachkondensation sehr rasch abläuft und dass dabei Produkte mit hoher Viskositätszahl (> 120 $cm^3$/g) erhalten werden, die insbesondere für die Herstellung von Formteilen nach dem Spritzguss- oder Extrusionsverfahren erforderlich ist.

Ferner zeichnen sich die erfindungsgemässen Formmassen durch eine hervorragende Hydrolysebeständigkeit aus, d.h. daraus hergestellt Formteile weisen eine sehr gute Heisswasserbeständigkeit auf. Diese Tatsache ist insofern überraschend, weil Co-Poly(alkylenterephthalate), welche Mononatrium-5-Sulfosisophthalat als Co-Komponente enthalten, als ausgesprochen hydrolyseanfällig gelten [Amer. Dyest. Rep. *57*, 36, (1970); Makromol. Chem. *176*, 2839, (1975)].

Die *Viskositätszahl (J)* wurde nach DIN 16 779, Teil 2, an Lösungen von 0,5 g Poly(butylenterephthalat) in 100 ml Phenol/o-Dichlorbenzol (50/50 Gew.-Teile) bei 25°C bestimmt.

Die *Hydrolysestabilität* der Copolyester wird durch die Abnahme der Viskositätszahl (J) nach einer 24-stündigen Behandlung des feingemahlenen Materials mit 130°C heissem Wasser in einem Drucktopf charakterisiert.

Der *Viskositätsabbau* wird als prozentuale Abnahme der Viskositätszahl (J) durch die Hydrolyse gegeben:

$$\frac{J_o - J_{Hydr.}}{J_o} \times 100$$

($J_o$: Ausgangsviskositätszahl, $J_{Hydr.}$: Viskositätszahl nach dem Hydrolysetest).

Mit Buchstaben gekennzeichnete Versuche sind nicht erfindungsgemäss.

*Beispiele*

I. *Herstellung der erfindungsgemässen Formmassen*

A. *Versuche 1 bis 6 bzw. 13 bis 18*

In einem 100 *l*-Kessel werden 200 Mol eines Gemisches aus Dimethylterephthalat und 5-Sulfoisophthalsäuretrinatriumsalz (Gehalt siehe jeweils Tabelle) mit 27 kg (300 Mol) Butandiol-(1.4) und 15 g Titantetraisopropylat als Katalysator in einem schwachen Stickstoffstrom zunächst 3 Stunden bei 160°C, dann 2 Stunden bei 200°C bis zur Abdestillation der theoretisch zu erwartenden Methanolmenge unter Rühren umgeestert.

Darauf wird im Verlauf von 2 Stunden Wasserstrahlvakuum angelegt, in weiteren 1,5 Stunden wird dann das Reaktionsgemisch unter Rühren auf 250°C aufgeheizt. Diese Bedingungen werden 30 Minuten gehalten, anschliessend wird ein Vakuum < 1 mbar angelegt, und das Reaktionsgemisch bis zu einer Viskositätszahl (J) von 95 bis 120 $cm^3$/g polykondensiert. Nach Aufheben des Vakuums mit $N_2$ wird die Schmelze in Strangform ausgetragen, in Wasser gekühlt, granuliert und getrocknet. Der Polyesteraustrag beträgt ca. 45 kg Granulat. Gegebenenfalls wird das Granulat noch zu Pulver gemahlen.

B. *Versuch 7*

1 Mol-% (bezogen auf die Dicarbonsäurekomponente) 5-Sulfoisophthalsäuretrinatriumsalz wird mit Poly(butylenterephthalat) (J: 110 $cm^3$/g) in einem diskontinuierlich arbeitenden Laborkneter bei 250°C in der Schmelze gemischt. Die Aufarbeitung der Schmelze erfolgt gemäss A.

C. *Versuche 8 bis 12*

Die Polyester werden entsprechend A. hergestellt, mit der Ausnahme, dass anstelle von 5-Sulfoisophthalsäuretrinatriumsalz die in Tabelle 2 angeführten Salze eingesetzt werden. Die Produkte werden als Pulver eingesetzt.

D. *Versuche A bis C*

Die Polyester werden gemäss A. hergestellt — jedoch ohne Zusatz eines erfindungsgemässen Salzes.

E. *Versuche D bis F*

Zum Vergleich wird Poly(etylenterephthalat) entsprechend A. hergestellt. Als Katalysator für die Umesterungsstufe werden 15 g Mn-Acetat und 3,3 g Co-Acetat sowie 43 g Triphenylphosphat und 1,1 g $GeO_2$ (gelöst in Ethylenglykol) als Katalysator für die Polykondensationsstufe eingesetzt. Im Unterschied zur Arbeitsweise nach A. werden die Umesterung in der ersten Temperaturstufe bei 180°C und die Polykondensation bei 280°C durchgeführt.

II. *Nachkondensation*

Die Nachkondensation der Produkte für die Versuche 1, 2 und A erfolgt in einem 500 *l*-Taumeltrockner im Wasserstrahlvakuum bei 210°C. Die in einer Labormühle feingemahlenen Produkte für die Versuche 3 bis 7 und B werden in einem Rotationsverdampfer im Ölpumpenvakuum bei 210°C nachkondensiert.

*Tabelle 1:* Nachkondensation

| Versuch | Gehalt an $Na_3[SIPS]$ *) [Mol-%] | J [cm³/g] nach einer Nachkondensationszeit [h] 0 | 6 | 24 |
|---|---|---|---|---|
| Granulat | | | | |
| 1 | 1,0 | 98 | 178 | 276 |
| 2 | 2,5 | 95 | 179 | 252 |
| A | 0 | 95 | 156 | 220 |
| Pulver | | | | |
| 3 | 0,5 | 120 | 338 | 482 |
| 4 | 1,0 | 120 | 330 | 490 |
| 5 | 2,5 | 112 | 258 | 418 |
| 6 | 5,0 | 95 | 214 | 348 |
| 7 | 1,0 | 106 | 258 | 354 |
| B | 0 | 118 | 190 | 280 |

*) [SIPS] = 5-Sulfoisophthalat

*Tabelle 2:* Nachkondensation

| Versuch | Salz | Gehalt [Mol-%] | J [cm³/g] nach einer Nachkondensationszeit [h] 0 | 6 | 24 |
|---|---|---|---|---|---|
| 8 | $NaK_2[SIPS]$ *) | 1,0 | 118 | 266 | 370 |
| 9 | $NaCa[SIPS]$ *) | 1,0 | 120 | 275 | 422 |
| 10 | $Na_2$-Isophthalat | 1,0 | 115 | 232 | 378 |
| 11 | $Na_2$-Isophthalat | 2,5 | 113 | 248 | 408 |

*) [SIPS] = 5-Sulfoisophathalat

*Tabelle 3:* Nachkondensation und Hydrolysestabilität

| Versuch | Gehalt $Na_3[SIPS]$ *) [Mol-%] | J [cm³/g] nach einer Nachkondensationszeit [h] 0 | 6 | 24 | Viskositätsabbau [%] |
|---|---|---|---|---|---|
| D | 0 | 95 | 122 | 149 | 65 |
| E | 1,0 | 79 | — | — | 62 |
| F | 2,5 | 78 | 120 | 150 | 62 |

*) [SIPS] = 5-Sulfoisophathalat

*Tabelle 4:* Hydrolysestabilität

| Versuch | Gehalt an $Na_3[SIPS]$ *) [Mol-%] | $J_o$ [cm³/g] | Viskositätsabbau ÷ %] |
|---|---|---|---|
| 13 | 0,5 | 158 **) | ***) |
| 14 | 1,0 | 98 | 12 |
| 15 | 1,0 | 162 **) | 3 |
| 16 | 2,5 | 95 | 11 |
| 17 | 2,5 | 178 **) | 8 |
| 18 | 2,5 | 242 **) | 7 |
| C | 0 | 109 | 45 |

*) [SIPS] = 5-Sulfoisophathalat
**) bei 210°C im Wasserstrahlvakuum nachkondensiert
***) Viskositätszahl nimmt zu

**Patentansprüche**

1. Hydrolysebeständige, thermoplastische Formmasse bestehend aus hochmolekularem, linearem Poly(butylenterephthalat) und 0,1 bis 10 Mol-%, bezogen auf die Dicarbonsäurekomponente des Polyesters, eines Salzes der allgemeinen Formel (A)

$$\left[ (^{-}O_3S)_x - R - (CO_2^{-})_2 \right] M \qquad (A)$$

in der
M = Alkali- bzw. Erdalkalimetall-Kation
R = aromatischer, cycloaliphatischer oder aliphatischer Rest mit 2 bis 20 C-Atomen in der Kohlenstoffkette
x = 0 oder 1
bedeuten.

2. Formmasse gemäss Anspruch 1, dadurch gekennzeichnet, dass als Salze der allgemeinen Formel (A) Alkalisalze der 5-Sulfoisophthalsäure im Polyester enthalten sind.

3. Formmasse gemäss Anspruch 1, dadurch gekennzeichnet, dass die Salze der allgemeinen Formel (A) Alkalisalze bzw. Erdalkalisalze der Isophthalsäure im Polyester enthalten sind.

4. Formmasse gemäss den Ansprüchen 1 bis 3, dadurch gekennzeichnet, dass die Salze der allgemeinen Formel (A) in einer Menge von 0,5 bis 2,5 Mol-%, bezogen auf die Dicarbonsäurekomponente des Polyesters, in der Formmasse enthalten sind.

**Claims**

1. A hydrolysis-resistant, thermoplastic moulding composition comprising high molecular weight, linear poly(butylene terephthalate) and 0.1 to 10 mol%, based on the dicarboxylic acid component of the polyester, of a salt of the general formula

$$\left[ (^{-}O_3S)_x - R - (CO_2^{-})_2 \right] M \qquad (A)$$

where
M is an alkali metal or alkaline earth metal cation,
R is an aromatic, cycloaliphatic or aliphatic radical of 2 to 20 carbon atoms in the carbon chain,
x is 0 or 1.

2. A moulding composition according to claim 1, characterised in that an alkali metal salt of 5-sulphoisophthalic acid is present in the polyester as the salt of general formula (A).

3. A moulding composition according to claim 1, characterised in that an alkali metal or alkaline earth metal salt of isophthalic acid is present in the polyester as the salt of general formula (A).

4. A moulding composition according to any of claims 1 to 3, characterised in that the salt of general formula (A) is present in the moulding composition in an amount of 0.5 to 2.5 mol%, based on the dicarboxylic acid component of the polyester.

**Revendications**

1. Masse à mouler thermoplastique, stable à l'hydrolyse, constituée par un polytéréphtalate de butylène linéaire, de poids moléculaire élevé, et par 0,1 à 10 mol%, relativement au constituant d'acide dicarboxylique du polyester, d'un sel de la formule générale (A):

$$\left[ (^{-}O_3S)_x - R - (CO_2^{-})_2 \right] M \qquad (A)$$

dans laquelle
M est le cathion d'un métal alcalin ou alcalino-terreux,
R est un radical aromatique, cyclo-aliphatique ou aliphatique comportant de 2 à 20 atomes de carbone dans la chaîne carbonée,
x est égal à zéro ou à 1.

2. Masse à mouler selon la revendication 1, caractérisée par le fait que le polyester renferme, comme sels de la formule générale (A), des sels alcalins de l'acide 5-sulfo-isophtalique.

3. Masse à mouler selon la revendication 1, caractérisée par le fait que le polyester renferme, comme sels de la formule générale (A), des sels alcalins ou alcalino-terreux de l'acide isophtalique.

4. Masse à mouler selon les revendications 1 à 3, caractérisée par le fait qu'elle renferme les sels de la formule générale (A) dans une quantité de 0,5 à 2,5 mol%. relativement au composant d'acide dicarboxylique.